# EUROPÄISCHE PATENTSCHRIFT

(11) **EP 0 413 083 B1**
(45) Veröffentlichungstag und Bekanntmachung des Hinweises auf die Patenterteilung: **01.09.1993**
(21) Anmeldenummer: 90103873.7
(22) Anmeldetag: 28.02.1990
(51) Int. Cl.: F16F 13/00

(54) **Gummilager mit hydraulischer Dämpfung**
Rubber mount with hydraulic damping
Support de caoutchouc avec amortissement hydraulique

(30) Priorität: 12.08.1989 DE 3926696
(43) Veröffentlichungstag der Anmeldung: 20.02.1991
(73) Patentinhaber: Firma Carl Freudenberg, 69469 Weinheim (DE)
(72) Erfinder: Freudenberg, Tillman, Dr., D-6940 Weinheim (DE)

(56) Entgegenhaltungen:
- DE-A- 3 210 731
- DE-A- 3 801 108
- US-A- 4 712 777
- PATENT ABSTRACTS OF JAPAN vol. 6, no. 163 (M-152)(1041) 26 August 1982

## Beschreibung

Die Erfindung betrifft ein Gummilager nach dem Oberbegriff von Anspruch 1.

Ein solches Gummilager ist aus der DE-A-34 47 950 und der DE-A-38 01 108 bekannt. Die elastische Aufhängung besteht dabei aus einer Folie, welche in allen Teilbereichen von übereinstimmender Dicke und randseitig in einer Trennwand eingespannt ist, welche ihrerseits in Richtung des Arbeitsraumes nachgiebig gelagert ist. Bei Einleitung von Schwingungen in das Gummilager ergibt sich hierdurch eine ständige Veränderung der gegenseitigen Zuordnung zwischen der Abschlußwand und dem Hohlraum.

Die Abschlußwand wird rückseitig durch einen Hohlraum begrenzt und der Boden des Hohlraumes bildet zugleich die Anschlagfläche. Mit dieser wird die Rückseite der Abschlußwand bei Einleitung akustisch störender Schwingungen durch Evakuierung des Hohlraumes in Eingriff gebracht. Die erzielte Isolierung akustisch störender Schwingungen ist wenig befriedigend.

Aus der JP-A-57 77 223 ist ein Gummilager bei dem ein Arbeitsraum von einem gummielastischen Federelement, einem Auflager, einer Trennwand sowie einer in Richtung des Arbeitsraumes nachgiebigen Abschlußwand begrenzt ist. Die Abschlußwand ist mit einer elastischen, direkt mit dem Auflager verbundenen Aufhängung versehen und in Abhängigkeit von vorgegebenen Parametern an eine dem Auflager 7 in starrer Weise zugeordnete Anschlagfläche anlegbar. Die Abschlußwand wird auch bei dieser Ausführung durch eine elastische Folie gebildet, welche in allen Teilbereichen von übereinstimmender Dicke ist.

Der Erfindung liegt die Aufgabe zugrunde, ein Gummilager der eingangs genannten Art derart weiterzuentwickeln, daß sich bei einer wesentlich verbesserten Isolierung akustisch störender Schwingungen eine verbesserte Gebrauchsdauer ergibt.

Diese Aufgabe wird erfindungsgemäß bei einem Gummilager der eingangs genannten Art durch die kennzeichnenden Merkmale von Anspruch 1 gelöst. Auf eine vorteilhafte Verwendung des erfindungsgemäßen Gummilagers nimmt Anspruch 2 Bezug.

Bei dem erfindungsgemäßen Gummilager ist die Aufhängung direkt mit dem Auflager verbunden, wobei die Anschlagfläche in bezug auf die Aufhängung kongruent gestaltet und dem Auflager in starrer Weise zugeordnet ist und wobei die Abschlußwand nur durch ihre Aufhängung als solche elastisch verformbar ist. Diese Aufhängung weist ein im wesentlichen dreieckig in Richtung der Abschlußwand erweitertes Profil auf, wobei die Aufhängung in Abhängigkeit von vorgegebenen Parametern, beispielsweise resonanzüberhöhten Schwingungen, mittels einer schaltbaren Einrichtung an die Anschlagfläche anlegbar und bei Einleitung akustisch störender Schwingungen frei beweglich geschaltet ist. Durch die in radialer Richtung nach innen zunehmenden Dicke der Aufhängung in Bewegungsrichtung ist eine gleichmäßige Walzbeanspruchung der Aufhängung auf ihrem gesamten Umfang gewährleistet. Für die Erzielung einer verbesserten Gebrauchsdauer ist das Merkmal von besonderer Bedeutung.

Durch die unmittelbare gegenseitige Verbindung zwischen der Aufhängung und dem Auflager ist die Abschlußwand in einer Position angebracht, die dem Arbeitsraum im wesentlichen gleichbleibend zugeordnet ist. Die bei Einleitung akustisch störender Schwingungen in das Auflager innerhalb des Arbeitsraumes induzierten Druckwellen vermögen die Abschlußwand daher nach einer weitgehend übereinstimmenden Laufzeit zu erreichen, was die Entstehung von synchronen Ausweichbewegungen der Abschlußwand begünstigt. Die Isolierung akustisch störender Schwingungen wird hierdurch wesentlich verbessert.

Des weiteren ermöglicht es die direkte gegenseitige Verbindung zwischen der Aufhängung und dem Auflager die Ersatzkolbenfläche der Abschlußwand in nennenswertem Maße zu vergrößern. Diese kann problemlos einen Wert erreichen, der die Größe der Ersatzkolbenfläche des Federelementes und des Auflagers übertrifft. Die sich bei einer Einfederung des Auflagers ergebende Ausweichbewegung der Abschlußwand ist hinsichtlich ihrer Amplitude dementsprechend vermindert, was maßgeblich dazu beiträgt, die auf der Einleitung akustisch störender Schwingungen in dem Arbeitsraum erzeugten Druckänderungen gut zu kompensieren. Hierzu ist es erfindungsgemäß vorgesehen, daß die Abschlußwand bei Einleitung entsprechender Schwingungen frei beweglich geschaltet ist, beispielsweise unter Zuhilfenahme von Sensoren, die unmittelbar an der die Schwingungen erregenden Schallquelle angebracht sind. Entsprechende Mittel sind bekannt und nicht Gegenstand der vorliegenden Erfindung.

Das erfindungsgemäße Gummilager eignet sich besonders gut zur Verwendung bei der Lagerung eines Verbrennungsmotors in einem Kraftfahrzeug. Das für die Steuerung der Relativbeweglichkeit der Abschlußwand benötigte Signal kann dabei dem Zündsignal entnommen werden, was die Verwendung eines gesonderten Sensors erübrigt.

Das erfindungsgemäße Gummilager ist im Hinblick auf eine Unterdrückung von resonanzüberhöhten Schwingungsausschlägen des gelagerten Maschinenteiles mit einer hydraulischen Dämpfungseinrichtung versehen. Diese kann sich der Verwendung von bekannten Mitteln bedienen, beispielsweise einer Verdrängerscheibe, von Drosselöffnungen o.ä.

Zur Steuerung der Relativbeweglichkeit der Begrenzungswand können die bekannten Stellantriebe verwendet werden, beispielsweise solche, die mechanisch, hydraulisch oder pneumatisch betätigt sind. Die Verwendung von Mischformen ist ebenfalls möglich.

Im Hinblick auf die Realisierung eines schnellen Schaltvorganges hat es sich als vorteilhaft erwiesen, wenn die Abschlußwand im zentralen Bereich völlig unverformbar gestaltet ist und beispielsweise aus Metall besteht. Elastisch verformbar ist in diesem Fall nur die Aufhängung als solche, welche die Abschlußwand randseitig umgibt und ihrerseits im Bereich des Außenumfanges mit dem Traglager verbunden ist, beispielsweise über einen in einer Nut angepaßten Querschnittes aufgenommenen Wulst.

Im Hinblick auf die Vermeidung von Anschlaggeräuschen sowie im Hinblick auf die Ermöglichung einer unbehinderten Relativbeweglichkeit der Abschlußwand hat es sich als vorteilhaft bewährt, wenn die Anschlagfläche in ihrer Ausdehnung auf den Bereich der Aufhängung beschränkt ist. Zweckmäßigerweise ist hierbei der gegenseitige Abstand zwischen der Aufhängung und der Anschlagfläche im neutralen, unbeschalteten Zustand so bemessen, daß sich in Bewegungsrichtung ein radial nach innen stetig zunehmender Wert ergibt. Die Erzielung eines gleichmäßigen Bewegungsablaufes in der Aufhängung während der bestimmungsgemäßen Verwendung wird hierdurch wesentlich begünstigt.

Der Gegenstand der Erfindung wird nachfolgend anhand der als Anlage beigefügten Zeichnung weiter verdeutlicht. Es zeigen:

### Figur 1

eine beispielhafte Ausführung des erfindungsgemäßen Gummilagers;

### Figuren 2 + 3

zwei alternative Ausführungen von Hilfsmitteln, die es gestatten, die Abschlußwand an der Anschlagfläche zur Anlage zu bringen.

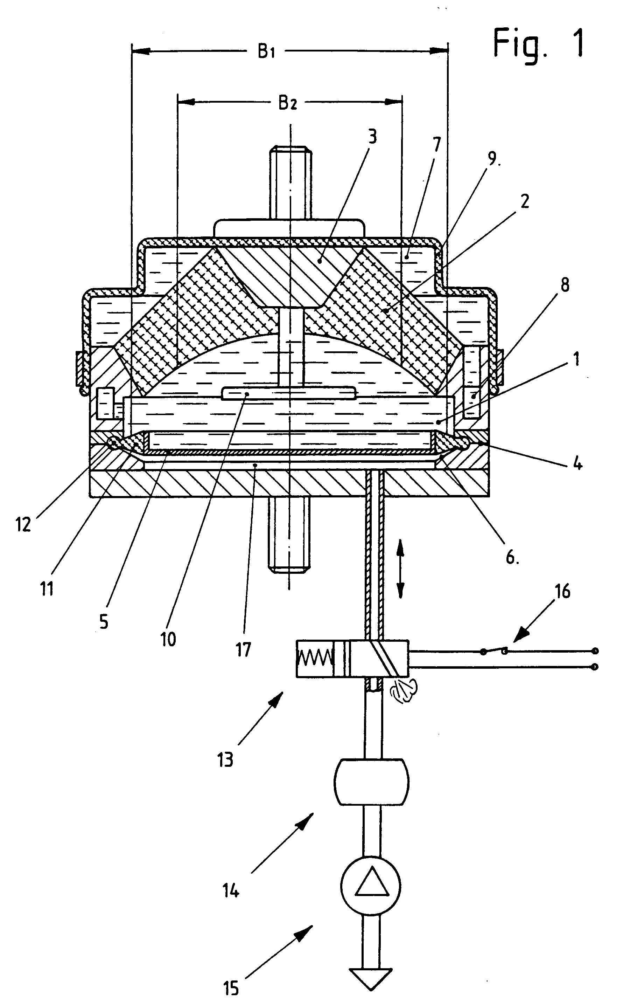

Das in Figur 1 gezeigte Gummilager ist mit einer hydraulischen Dämpfungseinrichtung versehen. Es umfaßt einen Arbeitsraum 1, der von einem gummielastischen Federelement 2, einem Auflager 3, einem Traglager 4 sowie einer in Richtung des Arbeitsraumes 1 nachgiebigen Abschlußwand 5 begrenzt ist, die mit einer elastischen Aufhängung 11 versehen und in Abhängigkeit von vorgegebenen Parametern an einer Anschlagfläche 6 anlegbar ist. Die Aufhängung 11 der Abschlußwand 5 ist direkt mit dem Traglager 4 verbunden, wobei es vorgesehen ist, daß die Anschlagfläche 6 dem Auflager 4 in starrer Weise zugeordnet ist und wobei die Abschlußwand 5 bei Einleitung akustisch störender Schwingungen frei beweglich geschaltet ist. Der Arbeitsraum 1 ist durch eine kanalartig ausgebildete Dämpfungsöffnung 8 mit einem Ausgleichsraum 7 verbunden. Sowohl der Arbeitsraum 1 als auch die Dämpfungsöffnung 8 und der Ausgleichsraum 7 sind vollständig mit einer hydraulischen Flüssigkeit gefüllt.

Der Ausgleichsraum 7 ist nach außen durch einen leicht verformbaren Faltenbalg 9 abgeschlossen und hierdurch zur drucklosen Aufnahme zusätzlicher Flüssigkeitsvolumina geeignet. Nach dem Aufbringen der bestimmungsgemäß zu tragenden, statischen Vorlast auf das Auflager 3 resultiert als Folge hiervon kein nennenswerter Druckanstieg in dem Arbeitsraum 1, der Dämpfungsöffnung 8 oder dem Ausgleichsraum 7.

Das Auflager 3 ist mit einer Verdrängerscheibe 10 verbunden, welche an einem säulenartigen Vorsprung befestigt und innerhalb des Arbeitsraumes 1 angeordnet ist. Die Abschlußwand 5 besteht aus einem tassenförmig gestalteten Tiefziehteil aus Stahlblech, welches randseitig mit einer elastischen Aufhängung 11 verbunden ist. Diese ist außenseitig von dem einstückig angeformten Wulst 12 umschlossen, welcher in einer Nut angepaßten Profils des Traglagers 4 gehalten ist. Die Ersatzkolbenfläche der Abschlußwand 5 einschließlich des relativ beweglichen Teils der Aufhängung 11 ist mit B1 bezeichnet, diejenige des Auflagers 3 und des relativ beweglichen Teils des Federelementes 2 mit B2. Es ist zu ersehen, daß die Ersatzkolbenfläche der Abschlußwand 5 eine größere Ausdehnung hat als diejenige des Auflagers 3 einschließlich des Federelementes 2.

Die elastische Aufhängung 11 der Abschlußwand 5 ist von im wesentlichen dreieckigem Profil. Hierdurch ist ein gleichmäßiger Bewegungsablauf bei einer Einfederung des Auflagers 3 gewährleistet.

Die Abschlußwand 5 ist rückseitig von einem Hohlraum 17 begrenzt, der durch eine Leitung im dargestellten Zustand mit der Atmosphäre verbunden ist. Die Abschlußwand 5 vermag dadurch bei Einleitung akustisch störender Schwingungen in das Auflager 3 den hieraus resultierenden Druckwellen leicht zu folgen und Druckänderungen zu kompensieren. Eine Übertragung akustisch störender Schwingungen über das Gummilager und insbesondere von Körperschall ist hierdurch weitestgehend ausgeschlossen.

Bei Einleitung von Relativbewegungen in das Auflager 3, welche resonanzüberhöhte Schwingungsausschläge des auf dem Gummilager gelagerten Maschinenteiles zur Folge haben können, wird der sensorbetätigte Schalter 16 geöffnet, was eine gegenseitige Verbindung des Hohlraumes 17 mit dem Unterdruckspeicher 14 und der Vakuumpumpe 15 bewirkt.

Ein schlagartiger Druckabfall in dem Hohlraum 17 ist hiervon die Folge und als Ergebnis davon ein gegenseitiger Berührungskontakt zwischen der elastischen Aufhängung 11 der Abschlußwand 5 und der unnachgiebigen Anschlagfläche 6. Die Abschlußwand 5 ist hierdurch in ihrer Relativbeweglichkeit blockiert, wodurch die eingeleiteten Schwingungen zu einer Hin- und Herbewegung von Flüssigkeitsbestandteilen in der Dämpfungsöffnung 8 zwischen dem Arbeitsraum 1 und dem Ausgleichsraum 7 führen. Die Schwingungen erfahren hierdurch eine Dämpfung. Nach ihrem Abklingen kann das Schaltventil 13 wieder in die gezeichnete Stellung überführt werden, was den Hohlraum 17 aufs Neue mit der Atmosphäre 18 verbindet, Relativbewegungen der Abschlußwand 5 zuläßt und eine gute Schwingungsisolierung ermöglicht.

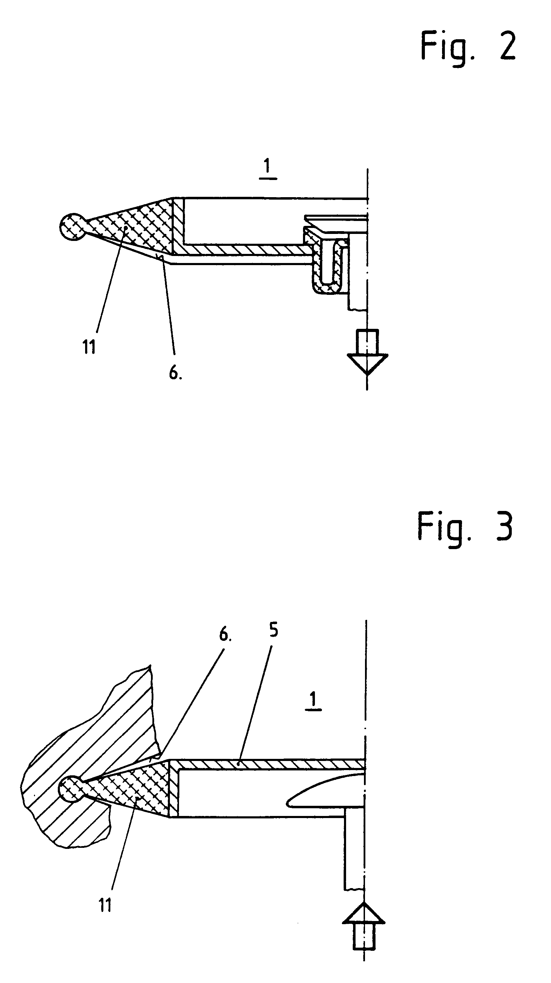

In den Figuren 2 und 3 sind zwei alternative Ausführungen von Abschlußwänden 5 dargestellt. Die Ausführung nach Figur 2 wird mit Hilfe eines Zugstempels an die Anschlagfläche 6 angelegt, diejenige nach Figur 3 mit Hilfe eines Druckstempels. Im erstgenannten Falle ist die Anschlagfläche 6 ähnlich der in Figur 1 gezeigten Ausführung auf der von dem Arbeitsraum 1 abgewandten Seite der Abschlußwand 5 vorgesehen. Bei der Ausführung nach Figur 4 ist die Anschlagfläche 6 demgegenüber der Abschlußwand in Richtung des Arbeitsraumes 1 vorgelagert. Die Hilfsmittel zur Blokkierung der Beweglichkeit sind in beiden Fällen mechanisch bzw. elektromechanisch betätigt.

## Patentansprüche

1. Gummilager mit hydraulischer Dämpfung, bei dem ein Arbeitsraum (1) von einem gummielastischen Federelement (2), einem Auflager (3), einem Traglager (4) sowie einer in Richtung des Arbeitsraumes (1) nachgiebigen Abschlußwand (5) begrenzt ist, die mit einer elastischen Aufhängung (11) versehen und in Abhängigkeit von vorgegebenen Parametern, beispielsweise resonanzüberhöhten Schwingungen, mittels einer schaltbaren Einrichtung (13 bis 16) an einer Anschlagfläche (6) anlegbar ist, wobei die Abschlußwand (5) bei Einleitung akustisch störender Schwingungen frei beweglich geschaltet ist, dadurch gekennzeichnet, daß die Aufhängung (11) direkt mit dem Traglager (4) verbunden ist, daß die Anschlagfläche (6) in bezug auf die Aufhängung (11) kongruent gestaltet und dem Traglager (4) in starrer Weise zugeordnet ist und daß die Abschlußwand (5) nur durch ihre Aufhängung als solche elastisch verformbar ist.

2. Verwendung des Gummilagers nach Anspruch 1 bei der Lagerung eines Verbrennungsmotors in einem Kraftfahrzeug.

## Claims

1. A rubber mount with hydraulic damping, in which a working space (1) is bounded by a rubber-elastic spring element (2), a support (3), a bearing support (4) and an end wall (5) which is flexible in the direction of the working space (1) and is provided with an elastic suspension (11) and can be brought to rest by means of a switchable device (13 to 16) against a stop face (6) as a function of predetermined parameters, for example vibrations with a resonant rise, the end wall (5) being switched so as to be freely movable when acoustically troublesome vibrations are introduced, characterised in that the suspension (11) is connected directly to the bearing support (4), in that the stop face (6) is of congruent configuration in relation to the suspension (11) and is associated with the bearing support (4) in a rigid manner, and in that the end wall (5) is elastically deformable only by virtue of its suspension as such.

2. The use of the rubber mount according to claim 1 in the mounting of an internal combustion engine in a motor vehicle.

## Revendications

1. Support en caoutchouc avec amortissement hydraulique, dans lequel un volume de travail (1) est délimité par un élément formant ressort (2) ayant l'élasticité du caoutchouc, un organe d'appui (3), un organe de support (4) ainsi qu'une paroi d'obturation (5) flexible en direction du volume de travail (1), qui est pourvue d'une suspension élastique (11) et qui peut être appliquée, en fonction de paramètres prédéterminés, par exemple de vibrations augmentées jusqu'à la mise en résonance, au moyen d'un dispositif commutable (13 à 16) contre une surface de butée (6), la paroi d'obturation (5) étant agencée de façon à être librement mobile lors de l'application de vibrations à effet acoustique perturbateur, caractérisé en ce que la suspension (11) est reliée directement à l'organe de support (4), en ce que la surface de butée (6) est pourvue d'une forme congruente par rapport à la suspension (11) et est associée d'une manière rigide à l'organe de support (4) et en ce que la paroi d'obturation (5) est déformable élastiquement seulement par sa suspension proprement dite.

2. Utilisation du support en caoutchouc selon la revendication 1, dans le système servant à supporter un moteur à combustion interne dans un véhicule automobile.
